# EUROPEAN PATENT SPECIFICATION

(11) **EP 2 497 865 B1**
(45) Date of publication and mention of the grant of the patent: **01.08.2018**
(21) Application number: 12158292.8
(22) Date of filing: 06.03.2012
(51) Int. Cl.: E02F 3/413, E02F 9/22, B66C 3/14, E02F 3/38, B66C 1/04, B66C 1/68, B66C 3/00, B66C 13/14, F16B 33/00, F16B 7/18, F16B 37/06

(54) **Piping guard for a material handling machine**
Rohrleitungsschutz für eine Materialhandhabungsmaschine
Protection de canalisations pour une machine de manipulation de matériau

(30) Priority: 09.03.2011 JP 2011051985
(43) Date of publication of application: 12.09.2012
(73) Proprietor: Hitachi Construction Machinery Co., Ltd., Taito-ku, Tokyo 110-0015 (JP)
(72) Inventor: Norita, Masayuki, Ibaraki 300-0013 (JP); Asahi, Shunsuke, Ibaraki 300-0013 (JP); Hanakawa, Kazuyoshi, Ibaraki 300-0013 (JP)
(74) Representative: Beetz & Partner mbB

(56) References cited:
- EP-A2- 1 607 528
- DE-A1-102008 032 255
- JP-A- 2000 073 399
- JP-A- 2003 278 178
- JP-A- 2006 194 362
- JP-U- S61 198 352

## Description

### Technical Field

The present invention relates to a piping guard of an operating machine. Particularly, it relates to a configuration of a piping guard provided suitably in a front end portion of an arm of a material handling machine.

### Background Art

A material handling machine is an operating machine in which an operating tool such as a grapple suspended on a front end of a long and massive arm is driven to perform operation such as handling of wastes. Hydraulic hoses for supplying pressure oil to the grapple are drawn in a length direction of an external surface of the arm (e.g. see JP-A-2009-274806 which discloses the preamble of claim 1). Incidentally, the grapple may be replaced by a magnet suspended on the front end of the arm of the material handling machine. On the external surface of the arm of the material handling machine applied to this purpose, a power supply cord for supplying electric power to the magnet is drawn in place of the hydraulic hoses or together with the hydraulic hoses. The following description will be made on a material handling machine in which only hydraulic hoses are attached to an arm, by way of example.

There is a possibility that any of the hydraulic hoses may be broken during operation due to collision with wastes or the like to be handled. In order to prevent this, it is necessary to provide some piping guard in the arm. On this occasion, in the configuration in which the whole piping parts of the hydraulic hoses are covered with the piping guard, the hydraulic hoses can be perfectly prevented from being broken. However, the arm is made so large in size and so large in weight that the handleability of the material handling machine is lowered. In most machine models, the piping guard is therefore attached to only a front end portion of the arm where the hydraulic hoses may be most likely to be broken. In addition, there are the case where welding is used and the case where bolting is used, as a method of attaching the piping guard to the arm. When, for example, the piping guard must be replaced by another with an optimum size in accordance with the size or the like of a coupler attached to each hydraulic hose, it is more advantageous that the piping guard is attached to the arm by bolting in order to make the operability satisfactory.

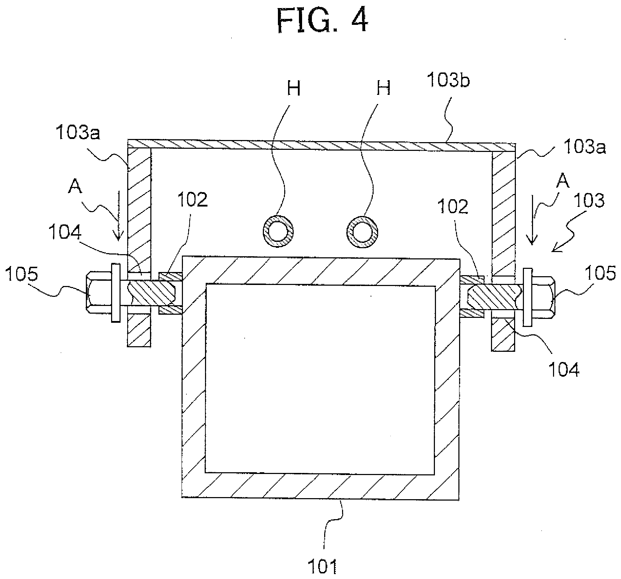

Fig. 4 shows a piping guard bolting system known in the background art. According to the background-art system, as is apparent from Fig. 4, nut bodies 102 are welded to opposite left and right side surfaces of an arm 101 so as to be opposed to each other, the arm 101 is formed out of a material shaped like a square tube, two guard plates 103a forming a piping guard 103 are disposed outside the nut bodies 102, and bolts 105 penetrating bolt through holes 104 made in the guard plates 103a are screwed into the nut bodies 102. The reference numeral 103b in Fig. 4 represents a coupling member coupling the two guard plates 103a, and the reference sign H in Fig. 4 represents a hydraulic hose. Opposite ends of the coupling member 103b are welded to the guard plates 103a.

According to the aforementioned configuration, however, a shearing force indicated by arrows A in Fig. 4 acts on the bolts 105 every time when wastes or the like to be handled collide with front endportions of the guard plates 103a during operation. Therefore, the bolts 105 may be easily broken due to fatigue. In the worst case, there is a possibility that the piping guard 103 may drop from the arm 101.

JP S61-198352U discloses a piping guard of an operating machine which comprises an arm, a hydraulic hose, guard plates attached to opposite sides of the arm by bolts and nut bodies.

JP 2006-194362A discloses a cover member mounting structure for construction machine, which has a double washer mounting part constituted by a small washer and a large washer made from steel. The small washer fills a gap between the upper large washer and the lower bracket.

### Summary of Invention

The present invention has been developed in consideration with such problems of the background art. An object of the invention is to provide an attachment structure of a piping guard in which the piping guard can be attached to an arm stably without any shearing force acting on bolts during operation due to collision with wastes or the like.

In order to solve the aforementioned problems, according to the invention, there is provided a piping guard of an operating machine including: guard plates attached to opposite sides of an arm by bolts and nut bodies into which the bolts are screwed, a hydraulic hose being drawn on the arm; wherein: stoppers are provided in either the arm or the guard plates to prevent a shearing force from acting on the bolts due to displacements of the guard plates relative to the arm.

According to this configuration, by the stoppers provided in either the arm or the guard plates, a shearing force can be prevented from acting on the bolts due to displacements of the guard plates relative to the arm. It is therefore possible to prevent the bolts from being broken due to fatigue and hence prevent the piping guard from dropping from the arm.

In addition, according to the invention, in the piping guard of the operating machine configured thus, columnar or tubular members are used as the stoppers, and the stoppers constituted by the columnar or tubular members are fixed to places of back surfaces of the guard plates to abut against a front end portion of the arm or against the nut bodies in a condition that a clearance is secured between each of bolt through holes provided in the guard plates and each of the bolts when the guard plates are attached to the opposite sides of the arm by the bolts and the nut bodies.

According to this configuration, when the guard plates tend to be displaced relatively to the arm in a shearing direction, the columnar members serving as the stoppers are pressed onto the front end portion of the arm or the nut bodies so that the guard plates are prevented from being further displaced. Thus, a shearing force does not act on the bolts so that the bolts can be prevented from being broken.

In addition, according to the invention, in the piping guard of the operating machine configured thus, members also serving as nut bodies and having threaded holes formed in central portions thereof are used as the stoppers, stopper through holes are made in the guard plates to allow the stoppers also serving as nut bodies to penetrate the stopper through holes, and the bolts are screwed into the threaded holes made in the stoppers also serving as nut bodies in a condition that the stoppers also serving as nut bodies are fixed to an external surface of the arm and inserted through the stopper through holes.

According to this configuration, when the guard plates tend to be displaced relatively to the arm in a shearing direction, circumferential surfaces of the stopper through holes are pressed onto the stoppers also serving as nut bodies so that the guard plates are prevented from being further displaced. Thus, a shearing force does not act on the bolts so that the bolts can be prevented from being broken.

In the piping guard of the operating machine according to the invention, the stoppers are provided in either the arm or the guard plates so as to prevent a shearing force from acting on the bolts due to displacements of the guard plates relative to the arm. Thus, even when an external force acts on the guard plates, a shearing force does not act on the bolts so that the bolts can be prevented from being broken.

### Brief Description of Drawings

Fig. 1 is a side view of a material handling machine to which a piping guard according to the invention is attached;
Fig. 2 is a main portion sectional view of a piping guard according to a first embodiment;
Fig. 3 is a main portion sectional view of a piping guard according to a second embodiment; and
Fig. 4 is a sectional view showing a configuration of a piping guard according to a background-art example. Description of Embodiments

First, a material handling machine in which a grapple is suspended on a front end portion of an arm will be described as an example of an operating machine to which the present invention is applied.

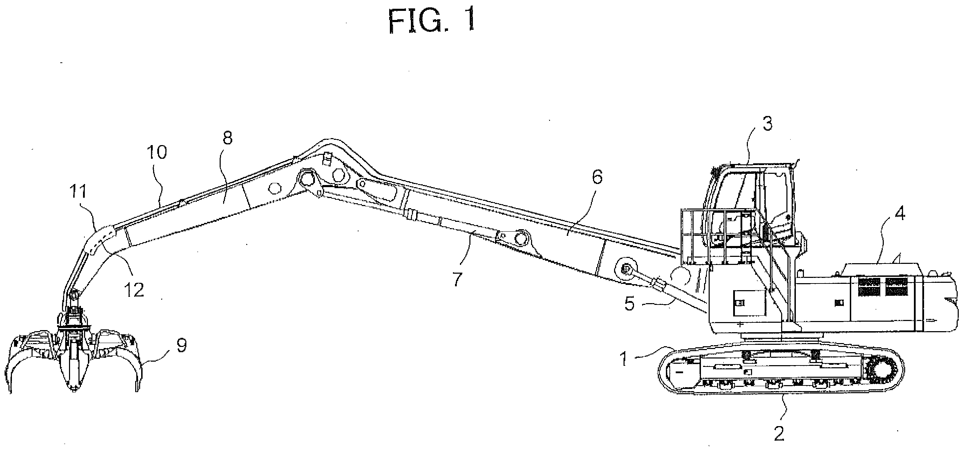

As shown in Fig. 1, the material handling machine according to this example has a lower-portion running body 2 which includes a crawler 1, an upper-portion rotary body 4 which has an operator's cab 3 and which is rotatably attached to an upper portion of the lower-portion running body 2, a boom 6 one end of which is rotatably linked with the upper-portion rotary body 4 and which is driven in an up/down direction by a boom cylinder 5, an arm 8 one end of which is rotatably linked with the boom 6 and which is driven in the up/down direction by an arm cylinder 7, and a grapple 9 which is suspended on a front end portion of the arm 8. The grapple 9 is driven by pressure oil supplied through hydraulic hoses 10 one ends of which are connected with a not-shown hydraulic pump mounted in the upper-portion rotary body 4 and which are piped along external surfaces of the boom 6 and the arm 8.

As shown in Fig. 1, a piping guard 11 for protecting the hydraulic hoses 10 is removably attached to a front end portion of the arm 8 by use of a plurality of bolts 12. For example, wastes or the like to be handled by the material handling machine are prevented from colliding with the hydraulic hoses 10 and breaking the hydraulic hoses 10.

### <First Embodiment of Piping Guard>

A piping guard according to the first embodiment will be described below.

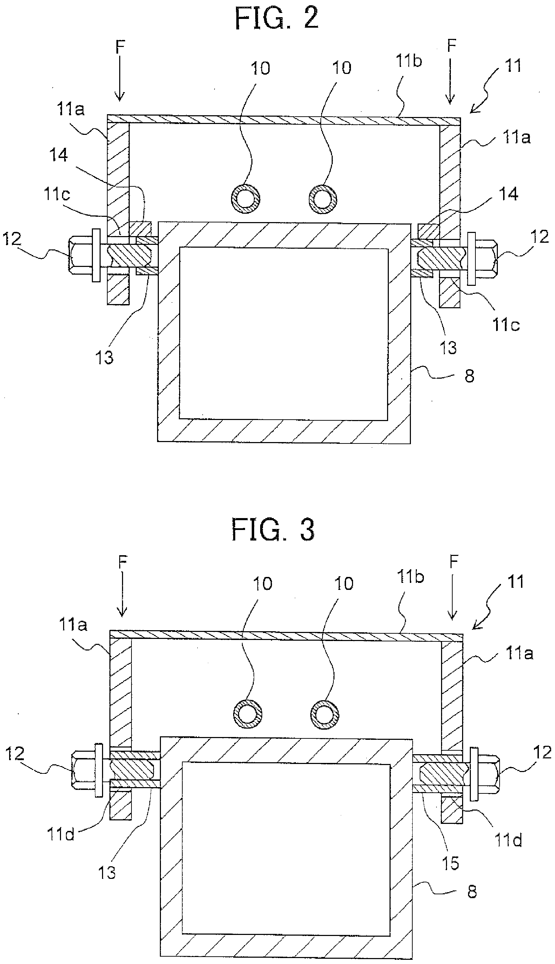

In this embodiment, as shown in Fig. 2, an arm 8 is formed like a square tube, and nut bodies 13 to which a piping guard 11 is attached are fixedly welded to opposite left and right sides of an external surface of the arm 8 so as to be opposed to each other. Hydraulic hoses 10 are piped on the external surface of the arm 8. A plurality of such pairs of the nut bodies 13 are fixed at predetermined intervals in a length direction of the arm 8.

On the other hand, the piping guard 11 is constituted by two guard plates 11a each having a predetermined shape and a predetermined size, and a coupling member 11b coupling front end portions of the two guard plates 11a. Bolt through holes 11c are made in predetermined positions of the guard plates 11a so as to be arrayed correspondingly to the nut bodies 13 respectively. In addition, stoppers 14 are attached and welded to places of inner surfaces (back surfaces) of the guard plates 11a so as to abut against a front end portion of the arm 8 or front end portions of the nut bodies 13 respectively in the condition that front end portions of the bolts 12 penetrating the bolt through holes 11c are screwed into the nut bodies 13 so as to secure a clearance between each bolt through hole 11c and each bolt 12. Columnar or tubular members are used as the stoppers 14.

The inner surfaces of the two guard plates 11a are brought into abutment against end surf aces of the nut bodies 13 and the bolt through holes 11c made in the guard plates 11a are opposed to the attachment positions of the nut bodies 13 corresponding thereto, respectively. Then, the front end portions of the bolts 12 penetrating the bolt through holes 11c are screwed into the nut bodies 13. Thus, the piping guard 11 is attached to the arm 8. On this occasion, the stoppers 14 attached to the inner surfaces of the guard plates 11a abut against the front end portions of the guard plates 11a or side surfaces of the nut bodies 13 respectively so that a collision force F caused by collision of foreign matters such as wastes with the front end portions of the guard plates 11a during operation can be received by the front end portions of the nut bodies 13 or the guard plates 11a through the stoppers 14, respectively. Thus, a shearing force can be prevented from acting on the bolts 12. It is therefore possible to prevent the bolts 12 from being broken due to fatigue by the shearing force acting thereon repeatedly. As a result, the piping guard 11 can be prevented from dropping from the arm 8.

### <Second Embodiment of Piping Guard>

Next, a piping guard according to a second embodiment will be described.

In this embodiment, as shown in Fig. 3, an arm 8 is formed like a square tube, and stoppers 15 also serving as nut bodies and having threaded holes made in central portions of end surfaces of the stoppers 15 so as to allow bolts 12 to be screwed into the threaded holes are fixedly welded to opposite left and right sides of an external surface of the arm 8 so as to be opposed to each other. The hydraulic hoses 10 are piped on the external surface of the arm 8. A plurality of such pairs of the stoppers 15 also serving as nut bodies are fixed at predetermined intervals in a length direction of the arm 8.

On the other hand, the piping guard 11 is constituted by two guard plates 11a each having a predetermined shape and a predetermined size, and a coupling member 11b coupling front end portions of the two guard plates 11a. Stopper through holes 11d are made in predetermined positions of the guard plates 11a so as to be arrayed correspondingly to the stoppers 15 also serving as nut bodies respectively.

The stoppers 15 also serving as nut bodies and fixed to the arm 8 are made to penetrate the stopper through holes 11d made in the guard plates 11a, respectively. Then, front end portions of the bolts 12 are screwed into the threaded holes formed in the stoppers 15 also serving as nut bodies. Thus, the piping guard 11 is attached to the arm 8. According to this configuration, a collision force F caused by collision of foreign matters such as wastes with the front end portions of the guard plates 11a during operation can be received by the stoppers 15 also serving as nut bodies, respectively. Thus, a shearing force can be prevented from acting on the bolts 12. It is therefore possible to prevent the bolts 12 from being broken due to fatigue by the shearing force acting thereon repeatedly. As a result, the piping guard 11 can be prevented from dropping from the arm 8.

Incidentally, if occasion demands, a power supply cord for supplying electric power to an electric operating tool such as a magnet may be drawn on the arm 8 in place of the hydraulic hoses 10 or together with the hydraulic hoses 10. In addition, although the coupling member 11b couples the front end portions of the two guard plates 11a with each other in the aforementioned embodiments, the coupling member 11b may be omitted.

The invention is applicable to an operating machine such as a material handling machine.

## Claims

1. A material handling machine comprising:
a boom (6),
an arm (8),
a grapple (9) suspended on a front end of an arm (8) of the machine; **characterised by** a piping guard comprising two guard plates (11a, 11a) each having a predetermined shape and a predetermined size and attached to opposite sides of the arm (8) by bolts (12) and nut bodies (13) into which the bolts (12) are screwed, a hydraulic hose (10) or an electric power supply cord running along the arm (8), wherein:
columnar or tubular members are used as stoppers (14) which are provided at inner surfaces of the guard plates (11a) to prevent a shearing force from acting on the bolts (12) due to displacements of the guard plates (11a) relative to the arm (8);
the stoppers (14) constituted by the columnar or tubular members are fixed by welding to places of back surfaces of the guard plates (11a) to abut against the nut bodies (13) in a condition that a clearance is secured between each of bolt through holes (11c) provided in the guard plates (11a) and each of the bolts (12) when the guard plates (11a) are attached to the opposite sides of the arm (8) by the bolts (12) and the nut bodies (13), and
the stoppers (14) abut against side surfaces of the nut bodies (13) so that a collision force caused by collision of foreign matters with the guard plates (11a) is received by front end portions of the nut bodies (13) or the guard plates (11a) through the stoppers (14).

## Patentansprüche

1. Materialhandhabungsmaschine umfassend:
einen Ausleger (6),
einen Arm (8),
einen Greifer (9), der an einem vorderen Ende eines Arms (8) der Maschine aufgehängt ist; **gekennzeichnet durch**
eine Leitungsschutzvorrichtung umfassend zwei Schutzplatten (11a, 11a) mit jeweils einer vorbestimmten Form und einer vorbestimmten Größe, die mittels Bolzen (12) und Mutterkörpern (13), in die die Bolzen (12) verschraubt sind, an entgegengesetzten Seiten des Arms (8) angebracht sind, einen Hydraulikschlauch (10) oder ein Stromversorgungskabel, der/das sich entlang des Arms (8) erstreckt,
wobei
säulen- oder rohrförmige Elemente als Anschläge (14) verwendet werden, die an Innenflächen der Schutzplatten (11a) vorgesehen sind, um zu verhindern, dass eine Scherkraft auf die Bolzen (12) aufgrund von Verschiebungen der Schutzplatten (11a) relativ zum Arm (8) wirkt;
die Anschläge (14), die durch die säulen- oder rohrförmigen Elemente gebildet sind, durch Schweißen an Stellen von Rückflächen der Schutzplatten (11a) befestigt sind, um gegen die Mutterkörper (13) in einem Zustand anzustoßen, in dem ein Zwischenraum zwischen einem jeden von Bolzendurchgangslöchern (11c), die in den Schutzplatten (11a) vorgesehen sind, und jedem der Bolzen (12), wenn die Schutzplatten (11a) an den gegenüberliegenden Seiten des Arms (8) mittels der Bolzen (12) und der Mutterkörper (13) angebracht sind, sichergestellt ist, und
die Anschläge (14) gegen Seitenflächen der Mutterkörper (13) anstoßen, sodass eine Kollisionskraft, die durch die Kollision von Fremdmaterial mit den Schutzplatten (11a) verursacht wird, durch vordere Endabschnitte der Mutterkörper (13) oder die Schutzplatten (11a) über die Anschläge (14) aufgenommen wird.

## Revendications

1. Machine de traitement de matériaux comprenant :
une flèche (6),
un bras (8),
un grappin (9) suspendu à une extrémité avant d'un bras (8) de la machine ; **caractérisée par**
un capot de canalisation comprenant deux plaques de capot (11a, 11a) ayant chacune une forme prédéterminée et une taille prédéterminée et fixée à des côtés opposés du bras (8) par des boulons (12) et des corps d'écrous (13) dans lesquels les boulons (12) sont vissés, un tuyau hydraulique (10) ou un cordon d'alimentation électrique passant le long du bras (8),
dans laquelle :
des éléments en forme de colonnes ou de tubes sont utilisés comme arrêts (14) qui sont prévus au niveau de surfaces internes des plaques de capot (11a) pour empêcher une force de cisaillement d'agir sur les boulons (12) en raison de déplacements des plaques de capot (11a) par rapport au bras (8) ;
les arrêts (14) constitués par les éléments en forme de colonnes ou de tubes sont fixés par soudage à des emplacements de surface arrière des plaques de capot (11a) afin de buter contre les corps d'écrous (13) dans une situation qui garantit un dégagement entre chacun des trous traversants de boulons (11c) pratiqués dans les plaques de capot (11a) et chacun des boulons (12) lorsque les plaques de capot (11a) sont fixées aux côtés opposées du bras (8) par les boulons (12) et les corps d'écrous (13), et
les arrêts (14) butent contre des surfaces latérales des corps d'écrous (13) de manière à ce qu'une force de collision due à la collision d'éléments étrangers avec les plaques de capot (11a) soit reçue par des sections terminales avant des corps d'écrous (13) ou des plaques de capot (11a) par l'intermédiaire des arrêts (14).
